(19) Europäisches Patentamt / European Patent Office / Office européen des brevets

(11) **EP 1 575 701 B1**

(12) **EUROPEAN PATENT SPECIFICATION**

(45) Date of publication and mention
of the grant of the patent:
**06.02.2008 Bulletin 2008/06**

(51) Int Cl.:
***B01J 8/42*** *(2006.01)*  ***B01J 19/12*** *(2006.01)*

(21) Application number: **03767621.0**

(22) Date of filing: **24.11.2003**

(86) International application number:
**PCT/EP2003/013163**

(87) International publication number:
**WO 2004/056467 (08.07.2004 Gazette 2004/28)**

(54) **TREATMENT OF GRANULAR SOLIDS IN AN ANNULAR FLUIDIZED BED WITH MICROWAVES**

MIKROWELLENBEHANDLUNG VON GRANULATEN IN EINEM RINGFÖRMIGEN WIRBELBETT

TRAITEMENT DE SOLIDES GRANULEUX DANS UN LIT FLUIDISE ANNULAIRE AU MOYEN DE MICRO-ONDES

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.12.2002 DE 10260745**

(43) Date of publication of application:
**21.09.2005 Bulletin 2005/38**

(73) Proprietor: **Outotec Oyj**
**02200 Espoo (FI)**

(72) Inventors:
• **STRÖDER, Michael**
**61267 Neu-Anspach (DE)**
• **GERDES, Thorsten**
**95448 Eckersdorf (DE)**
• **WILLERT-PORADA, Monika**
**95448 Bayreuth (DE)**
• **ANASTASIJEVIC, Nikola**
**63674 Altenstadt (DE)**

(74) Representative: **KEIL & SCHAAFHAUSEN**
**Patentanwälte**
**Cronstettenstrasse 66**
**60322 Frankfurt am Main (DE)**

(56) References cited:
**US-A- 3 528 179**  **US-A- 5 382 412**

## Description

### Technical Field

This invention relates to a method and a plant for the thermal treatment of granular solids in a fluidized-bed reactor, in which microwave radiation from a microwave source is fed into the reactor.

Such method is known from US 5,972,302, wherein sulfidic ore is subjected to an oxidation supported by microwaves. This method is chiefly concerned with the calcination of pyrite in a fluidized bed, wherein the microwaves introduced into the fluidized bed promote the formation of hematite and elementary sulfur and suppress the formation of $SO_2$. There is employed a stationary fluidized bed which is irradiated by the microwave source disposed directly above the same. The microwave source or the entrance point of the microwaves necessarily gets in contact with the gases, vapors and dusts ascending from the fluidized bed.

Examples for possible couplings of the microwave source to mixing chambers are: open wave guide, slot antenna, coupling loop, diaphragm, coaxial antenna filled with gas or another dielectric, wave guide occluded with a microwave-transparent substance.

EP 0 403 820 B1 describes a method for drying substances in a fluidized bed, wherein the microwave source is disposed outside the fluidized bed and the microwaves are introduced into the fluidized bed by means of a wave guide. Open wave guides involve the risk that the microwave source is soiled by dust and gases and damaged in the course of time. This can be avoided by microwave-transparent windows, which occlude the wave guide between the reactor and the microwave source. In this case, however, deposits on the window lead to an impairment of the microwave irradiation.

### Description of the Invention

Therefore, it is the object underlying the invention to create a fluidized-bed reactor with particularly good mass and heat transfer conditions, in which the microwave source is protected against the gases, vapors and dusts produced.

In accordance with the invention, there is provided a method comprising the features of claim 1.

In the method of the invention, the advantages of a stationary fluidized bed, such as a sufficiently long solids retention time, and the advantages of a circulating fluidized bed, such as a good mass and heat transfer, can surprisingly be combined with each other during the heat treatment, while the disadvantages of both systems are avoided. When passing through the upper region of the central tube, the first gas or gas mixture entrains solids from the annular stationary fluidized bed, which is referred to as annular fluidized bed, into the mixing chamber, so that due to the high slip velocities between solids and first gas an intensively mixed suspension is formed and an optimum mass and heat transfer between the two phases is achieved. For generating the necessary process heat, microwave radiation is used in accordance with the microwave radiation is used in accordance with the invention. Since the microwaves are also introduced into the reactor through the central tube, the largest microwave power density in the mixing chamber exists above the orifice of the central tube, where the solids obtained in the suspension absorb the microwaves particularly well. Therefore, the energetic utilization of the microwaves is particularly effective in the method in accordance with the invention. By means of the gas stream from the central tube it is also reliably avoided that dust or process gases enter the central tube, spread up to the microwave source and damage the same. In accordance with the invention, microwave-transparent windows for shielding the wave guide, as they are commonly used in the prior art, can therefore be omitted. These involve the problem that deposits of dust or other solids on the window can impair and partly absorb the microwave radiation.

It has turned out that good process properties are given when the gas velocities of the first gas or gas mixture and of the fluidizing gas for the annular fluidized bed are adjusted such that the Particle-Froude-Numbers in the gas supply tube are between 1 and 100, in the annular fluidized bed between 0.02 and 2 and in the mixing chamber between 0.3 and 30. By correspondingly adjusting the gas velocities of the first gas or gas mixture and of the fluidizing gas as well as of the bed height in the annular fluidized bed, the solids loading of the suspension above the orifice region of the central tube can be varied within wide ranges and for instance be increased up to 30 kg solids per kg gas, wherein the pressure loss of the first gas between the orifice region of the central tube and the upper outlet of the mixing chamber can lie between 1 mbar and 100 mbar. In the case of a high solids loading of the suspension in the mixing chamber, a large part of the solids will separate out of the suspension and fall back into the annular fluidized bed. This recirculation is called internal solids recirculation, the stream of solids circulating in this internal circulation normally being significantly larger than the amount of solids supplied to the reactor from outside, for instance higher by one order of magnitude. The (smaller) amount of not precipitated solids is discharged from the mixing chamber together with the first gas or gas mixture. The retention time of the solids in the reactor can be varied within wide limits by the selection of height and cross-sectional area of the annular fluidized bed and be adjusted to the desired heat treatment. Due to the high solids loading on the one hand and the good suspending of the solids in the gas stream on the other hand, excellent conditions for a good mass and heat transfer by the microwave radiation acting in this region are obtained above the orifice region of the central tube. The amount of solids discharged from the reactor with the gas stream is completely or at least partly recirculated to the reactor, the recirculation expediently being effected into the stationary fluidized bed. The solids mass flow thus recirculated to the annular fluidized bed normally lies in the same order of magnitude as the solids mass flow supplied to the reactor from outside. Apart from the excellent utilization of energy, another advantage of the method in accordance with the invention consists in the possibility of quickly, easily and reliably adjusting the energy transfer of the method and the mass transfer to the requirements by changing the flow velocities of the first gas or gas mixture and of the fluidizing gas.

To ensure a particularly effective heat transfer in the mixing chamber and a sufficient retention time in the reactor, the gas velocities of the first gas mixture and of the fluidizing gas for the fluidized bed are preferably adjusted such that the dimensionless Particle-Froude-Numbers ($Fr_p$) are 1.15 to 20 in the central tube, 0.115 to 1.15 in the annular fluidized bed and/or 0.37 to 3.7 in the mixing chamber. The Particle-Froude-Numbers are each defined by the following equation:

$$Fr_P = \frac{u}{\sqrt{\frac{(\rho_s - \rho_f)}{\rho_f} * d_p * g}}$$

with

u =  effective velocity of the gas flow in m/s
$\rho_s$ =  density of the solid particles in $kg/m^3$
$\rho_f$ =  effective density of the fluidizing gas in $kg/m^3$
$d_p$ =  mean diameter in m of the particles of the reactor inventory (or the particles formed) during operation of the reactor
g =  gravitational constant in $m/s^2$.

When using this equation it should be considered that $d_p$ does not indicate the mean diameter ($d_{50}$) of the material used, but the mean diameter of the reactor inventory formed during the operation of the reactor, which can differ significantly in both directions from the mean diameter of the material used (primary particles). Even from very fine-grained material with a mean diameter of e.g. 3 to 10 $\mu$m, particles (secondary particles) with a mean diameter of 20 to 30 $\mu$m can for instance be formed during the heat treatment. On the other hand, some materials, e.g. ores, are decrepitated during the heat treatment.

In accordance with a development of the invention it is proposed to adjust the bed height of solids in the reactor such that the annular fluidized bed for instance at least partly extends beyond the upper orifice end of the central tube by a few centimeters, and thus solids are constantly introduced into the first gas or gas mixture and entrained by the gas stream to the mixing chamber located above the orifice region of the central tube. In this way, a particularly high solids loading of the suspension is achieved above the orifice region of the central tube.

In accordance with the invention it is proposed that the central tube constitutes a wave guide, so that the microwave radiation is directly fed into the mixing chamber of the reactor through the central tube constituting a corresponding microwave guide. This arrangement is recommended in particular when the first gas or gas mixture (process gas) also passed through the central tube is not much contaminated with dust or the dust only marginally couples the microwave power on its way through the central tube. But when dust contained in the process gas considerably couples the microwave power, the microwave radiation can alternatively or additionally be fed into the mixing chamber through at least one wave guide different from the central tube, which wave guide is arranged in the central tube and preferably ends for instance in the vicinity of the orifice of the central tube. Thus, the microwave radiation likewise can specifically be coupled in the vicinity of the mixing chamber of the reactor, without dust contained in the first gas mixture previously having absorbed part of the power of the microwave radiation. In both cases, so high gas velocities are chosen in accordance with the invention that a recession of the dust from the reactor into the central tube and the wave guide is prevented.

An improvement of the method is achieved when the microwave radiation is introduced through a plurality of wave guides, each wave guide being provided with a separate microwave source. For this purpose, instead of one central tube constituting a wave guide of large diameter a plurality of central tubes may constitute wave guides, to each of which a separate microwave source is connected. In accordance with the invention, one or more wave guides of smaller cross-section can alternatively be passed through a large central tube into the interior of the reactor, the wave guides being sealed against the central tube in a gas-tight way and each wave guide being provided with a separate microwave source. Dust-laden process gas, for instance, then is still introduced into the mixing chamber through the central tube. By means of such modular construction, an increased availability of the plant can also be realized.

In accordance with the invention, a purge gas furthermore is passed through the reactor, which can for instance be a filtered or otherwise cleaned exhaust gas from the reactor or a parallel process. Due to the continuous purge gas stream through the wave guide, solid deposits in the wave guide are avoided, which would change the cross-section of the wave guide in an undesired way and absorb part of the microwave energy which originally was designed for the solids in the reactor. Due to the energy absorption in the wave guide, the same would also heat up very much, whereby the material would be exposed to a strong thermal wear. In addition, solid deposits in the wave guide would effect undesired feedback reactions to the microwave source.

As sources for the electromagnetic waves (microwave sources), a magnetron or a klystron can for instance be used. Furthermore, high-frequency generators with corresponding coils or power transistors can be be used. The frequencies of the electromagnetic waves proceeding from the microwave source usually lie in the range from 300 MHz to 30 GHz. Preferably, the ISM frequencies 435 MHz, 915 MHz and 2.45 GHz are used. Expediently, the optimum frequencies are determined for each application in a trial operation. Since the frequencies of the microwave sources are fixed, the maximum heating capacity is fixed as well. By installing a multitude of small microwave sources, the heating capacity of the fluidized bed can, however, be adjusted optimally. In accordance with the invention, it is furthermore provided to adjust the cross-section and the dimensions of the wave guide to the used frequency of the microwave radiation, in order to provide for an energy input rather free of loss.

The temperatures in the fluidized bed (stationary annular fluidized bed) usually lie in the range from 150 to 1500°C. For certain processes, additional heat can be introduced into the fluidized bed for instance through indirect heat exchange. For temperature measurement in the fluidized bed, insulated sensing elements, radiation pyrometers or fiber-optic sensors can be used.

For adjusting the mean solids retention time in the reactor, it is provided in accordance with the invention that solids discharged from the reactor and separated in a downstream separator are at least partly recirculated into the annular fluidized bed of the reactor. The remaining amount then is supplied to further method steps. In accordance with a preferred embodiment, a cyclone for separating solids is provided downstream of the reactor, the cyclone having a solids conduit leading to the annular fluidized bed of the reactor.

Another improvement is obtained when the gas introduced through the wave guide is also utilized for fluidizing the fluidized bed. Thus, part of the gas is used for dedusting the wave guide, which previously was introduced into the fluidized bed through other supply conduits.

In accordance with the invention, fine-grained solids are used as starting material, the grain size at least of the major part of the solids being smaller than 1 mm. The granular solids to be treated can for instance be ores and in particular sulfidic ores, which are prepared e.g. for recovering gold, copper or zinc. Furthermore, recycling substances, e.g. zinc-containing processing oxide, or waste substances can be subjected to a thermal treatment in the fluidized bed. If sulfidic ores, such as e.g. auriferous arsenopyrite, are subjected to the method, the sulfide is converted to oxide, and with a suitable procedure there is preferably formed elementary sulfur and only small amounts of $SO_2$. The method of the invention loosens the structure of the ore in a favorable way, so that a subsequent leaching leads to improved yields. The arsenic iron sulfide (FeAsS) preferably formed by the thermal treatment can easily be disposed of.

A plant in accordance with the invention comprises the features of claim 16. It includes a reactor constituting a fluidized-bed reactor for the thermal treatment of fine-grained solids, and a microwave source. To the reactor a gas supply system is connected, which can in particular include a gas supply tube and is formed such that gas flowing through the gas supply system entrains solids from a stationary annular fluidized bed, which at least partly surrounds the gas supply system, into a mixing chamber of the reactor, and that the microwave radiation generated by the microwave source can be introduced through the gas supply system. Preferably, this gas supply system extends into the mixing chamber.

In accordance with the invention, the gas supply system preferably includes a gas supply tube (central tube) extending upwards substantially vertically from the lower region of the reactor preferably into the mixing chamber of the reactor, which gas supply tube is surrounded by a chamber which at least partly extends around the central tube and in which the stationary annular fluidized bed is formed. The central tube can constitute a nozzle at its outlet opening and/or have one or more apertures distributed around its shell surface, so that during the operation of the reactor solids constantly get into the central tube through the apertures and are entrained by the first gas or gas mixture through the central tube into the mixing chamber. Of course, two or more central tubes with different or identical dimensions and shapes may also be provided in the reactor. Preferably, however, at least one of the central tubes is arranged approximately centrally with reference to the cross-sectional area of the reactor.

In accordance with the invention, the microwave radiation is supplied to the reactor in a wave guide. Microwave radiation can be conducted in electrically conductive hollow sections of all kinds of geometries, as long as their dimensions do not fall below certain minimum values. The wave guide wholly or largely consists of an electrically conductive material, e.g. copper. In a first embodiment, the gas supply tube directly constitutes a wave guide for introducing the microwaves.

Beside the simple structure of a reactor designed in this way, the gas stream additionally present in the wave guide avoids that dust or other impurities advance through the wave guide up to the microwave source and damage the same. In addition, the gas in the gas supply tube can already be preheated by the microwaves in dependence on the absorption capacity of the gas or particles contained therein.

Alternatively or in addition, at least one separate wave guide for feeding the microwave radiation into the reactor can be arranged in the gas supply tube in accordance with the invention, for instance in the form of a lance. When the wave guide ends approximately in the orifice region of the central tube or shortly below the same, the gas stream flowing into the mixing chamber avoids an ingress of impurities into the wave guide. At the same time, the microwave radiation can be introduced into the reactor substantially free of loss. In accordance with the invention, a plurality of gas supply tubes (central tubes) and/or a plurality of wave guides can also be provided in accordance with the invention, a separate microwave source being connected to each wave guide. Thus, the microwave intensity in the reactor can be varied simply by shutting on and off individual microwave sources, without the intensity or frequency of a microwave source having to be changed. This is particularly advantageous, because it is thus possible to maintain the optimum adjustment of the microwave source and the respectively connected wave guide and nevertheless change the total intensity in the reactor.

The exact calculation of the resonance conditions involves rather complex mathematics, as the Maxwell equations (unsteady, nonlinear differential equations) must ultimately be solved with the corresponding marginal conditions. In the case of a rectangular or round wave guide cross-section, however, the equations can be simplified to such an extent that they can be solved analytically and problems as regards the design of wave guides therefore become clearer and are easier to solve. Therefore, and due to the relatively easy production, only rectangular wave guides and round wave guides are used industrially, which are also preferably used in accordance with the invention. The chiefly used rectangular wave guides are standardized in the Anglo-Saxon literature.

These standard dimensions were adopted in Germany, which is why odd dimensions appear in part. In general, all industrial microwave sources of the frequency 2.45 GHz are equipped with a rectangular wave guide of the type R26, which has a cross-section of 43 x 86 mm. In wave guides, different oscillation states exist: In the transversal electric mode (TE mode), the electric field component lies transverse to the wave guide direction and the magnetic component lies in wave guide direction. In the transversal magnetic mode (TM mode), the magnetic field component lies transverse to the wave guide direction and the electric component lies in wave guide direction. Both oscillation states can appear in all directions in space with different mode numbers (e.g. TE-1-1, TM-2-0).

In accordance with the invention, the length of a wave guide lies in the range from 0.1 to 10 m. It turned out that wave guides of this length can be handled particularly easily in practice. The wave guide may be of a straight or bent design.

In the annular fluidized bed and/or the mixing chamber of the reactor, means for deflecting the solid and/or fluid flows may be provided in accordance with the invention. It is for instance possible to position an annular weir, whose diameter lies between that of the central tube and that of the reactor wall, in the annular fluidized bed such that the upper edge of the weir protrudes beyond the solids level obtained during operation, whereas the lower edge of the weir is arranged at a distance from the gas distributor or the like. Thus, solids separated out of the mixing chamber in the vicinity of the reactor wall must first pass by the weir at the lower edge thereof, before they can be entrained by the gas flow of the central tube back into the mixing chamber. In this way, an exchange of solids is enforced in the annular fluidized bed, so that a more uniform retention time of the solids in the annular fluidized bed is obtained.

Developments, advantages and possible applications of the invention can also be taken from the following description of embodiments and the drawings. All features described and/or illustrated in the drawings form the subject-matter of the invention per se or in any combination, independent of their inclusion in the claims or their back-reference.

**Brief Description of the Drawings**

Fig. 1 shows a process diagram of a method and a plant in accordance with a first embodiment of the present invention;

Fig. 2 shows a reactor for performing the method in accordance with a second embodiment of the present invention; and

Fig. 3 shows a reactor for performing the method in accordance with a third embodiment of the present invention.

**Detailed Description of the Preferred Embodiments**

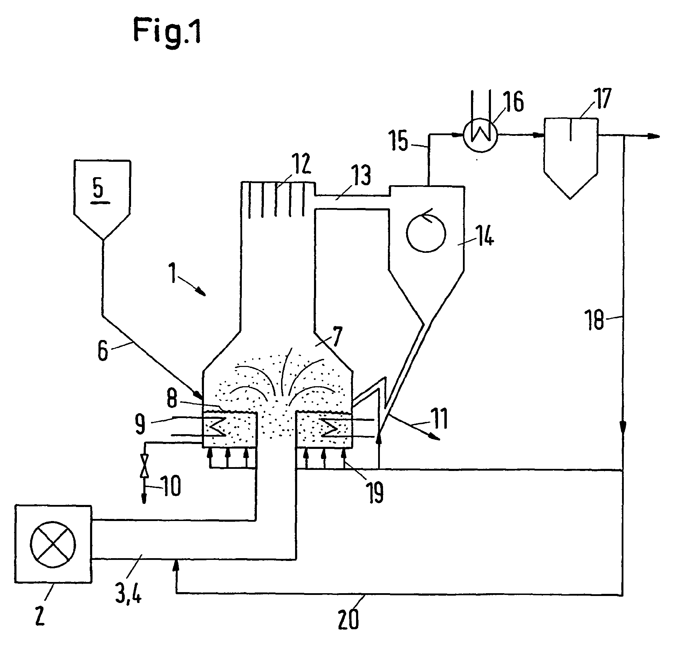

With reference to Fig. 1, the plant and the method for the thermal treatment of solids are first described in general to explain the operation in accordance with the invention.

For the thermal treatment of solids, the plant includes a for instance cylindrical reactor 1 with a central tube 3 arranged approximately coaxially with the longitudinal axis of the reactor, which central tube extends upwards substantially vertically from the bottom of the reactor 1. In the vicinity of the bottom of the reactor 1, a non-illustrated gas distributor is provided, into which open supply conduits 19. In the vertically upper region of the reactor 1, which forms a mixing chamber 7, an outlet 13 is disposed, which opens into a separator 14 constituting a cyclone.

When solids, for instance in the form of granular ores, from a solids bunker 5 are now introduced into the reactor 1 via the solids conduit 6, a layer annularly surrounding the central tube 3 is formed on the gas distributor, which layer is referred to as annular fluidized bed 8. Both the reactor 1 and the central tube 3 can of course also have a cross-section different from the preferred round cross-section, as long as the annular fluidized bed 8 at least partly surrounds the central tube 3. Fluidizing gas introduced through the supply conduits 19 flows through the gas distributor and fluidizes the annular fluidized bed 8, so that a stationary fluidized bed is formed. Preferably, the gas distributor constitutes a jet bank with a larger number of individual jets which are connected to the supply conduits 19. In a simpler embodiment, the gas distributor can also constitute a grid with a gas distributor chamber disposed below the same. The velocity of the gases supplied to the reactor 1 is adjusted such that the Particle-Froude-Number in the annular fluidized bed 8 is between about 0.115 and 1.15.

By supplying more solids into the annular fluidized bed 8, the solids level in the reactor 1 is raised to such an extent that solids get to the orifice of the central tube 3. Through the central tube 3, a preferably hot gas or gas mixture with a temperature between 200 and 1000°C is introduced into the reactor 1. The velocity of the gas supplied to the reactor 1 through the central tube 3 preferably is adjusted such that the Particle-Froude-Number in the central tube 3 approximately is between 1.15 and 20 and in the mixing chamber 7 approximately between 0.37 and 3.7.

Since the solids level of the annular fluidized bed 8 is raised above the upper edge of the central tube 3, solids flow over this edge into the central tube 3. The upper edge of the central tube 3 can be straight or be shaped differently, for instance be serrated, or have lateral openings. Due to the high gas velocities, the gas flowing through the central tube 3 entrains solids from the stationary annular fluidized bed 8 into the mixing chamber 7 when passing through the upper orifice region, whereby an intensively intermixed suspension is formed.

At the end of the central tube 3 opposite the reactor 1, a microwave source 2 is arranged. The microwave rays generated there are introduced into the mixing chamber 7 via the central tube 3 constituting a wave guide 4 and at least partly contribute to the heating of the reactor 1.

The type of decoupling the microwaves from the wave guide 4 serving as feed conduit can be effected in different ways. Theoretically, microwave energy can be transported in wave guides free of loss. The wave guide cross-section is obtained as a logical development of an electric oscillating circuit comprising coil and capacitor towards very high frequencies. Theoretically, such oscillating circuit can likewise be operated free of loss. In the case of a substantial increase of the resonance frequency, the coil of an electric oscillating circuit becomes half a winding, which corresponds to the one side of the wave guide cross-section. The capacitor becomes a plate capacitor, which likewise corresponds to two sides of the wave guide cross-section. In reality, an oscillating circuit loses energy due to the ohmic resistance in coil and capacitor. The wave guide loses energy due to the ohmic resistance in the wave guide wall.

Energy can be branched off from an electric oscillating circuit by coupling a second oscillating circuit thereto, which withdraws energy from the first one. Similarly, by flanging a second wave guide to a first wave guide energy can be decoupled from the same (wave guide transition). When the first wave guide is shut off behind the coupling point by a shorting plunger, the entire energy can even be diverted to the second wave guide.

The microwave energy in a wave guide is enclosed by the electrically conductive walls. In the walls, wall currents are flowing, and in the wave guide cross-section an electromagnetic field exists, whose field strength can be several 10 KV per meter. When an electrically conductive antenna rod is now put into the wave guide, the same can directly dissipate the potential difference of the electromagnetic field and with a suitable shape also emit the same again at its end (antenna or probe decoupling). An antenna rod which enters the wave guide through an opening and contacts the wave guide wall at another point can still directly receive wall currents and likewise emit the same at its end. When the wave guide is shut off behind the antenna coupling by a shorting plunger, the entire energy can be diverted from the wave guide into the antenna in this case as well.

When the field lines of the wall currents in wave guides are interrupted by slots, microwave energy emerges from the wave guide through these slots (slot decoupling), as the energy cannot flow on in the wall. The wall currents in a rectangular wave guide flow parallel to the center line on the middle of the broad side of the wave guide, and transverse to the center line on the middle of the narrow side of the wave guide. Transverse slots in the broad side and longitudinal slots in the narrow side therefore decouple microwave radiation from wave guides.

The microwave radiation decoupled from the wave guide 4 in one of the above-described ways is absorbed by the suspension formed in the mixing chamber 7, in particular by the solids bound therein, and contributes to the heating thereof. The desired reaction of the granular solids with the process gas supplied through the central tube 3 then takes place in the mixing chamber 7. Here, the temperature lies between 200 and 1500°C. Due to a reduction of the flow velocity of the first gas (process gas) expanded in the mixing chamber 7 or due to impacts against the reactor wall, reacted granular material sinks back into the annular fluidized bed 8, where it can be heated to and maintained at the desired temperature by the heating elements 9. Coarse solids are withdrawn via a discharge conduit 10. The gas containing the residual, non-precipitated amounted of solids flows into the upper part of the reactor, in which the dust-laden gases are cooled down by the cooling elements 12. Via the outlet 13, the gases are introduced into the cyclone 14 constituting a separator, at the front side of which the gas is withdrawn via a conduit 15 and cooled in a cooler 16. The gas is de-dusted in a further separator 17, for instance a cyclone or filter, and supplied as dust-free gas from below in part through the conduits 18, 19 via rotating nozzles into the annular fluidized bed 8 for further processing. Another conduit 20 branches off dust-free gas into the central tuyere 3 or the wave guide 4 and serves as purge gas and/or process gas, in order to keep the conduit 3, 4 dust-free. In addition, free process gas can be mixed into the central tube 3 via a non-illustrated conduit.

The solids, in particular dust, separated in the separator are recirculated via the bottom of the cyclone 14 into the annular fluidized bed 8, and it is possible here to discharge fine solids as product via conduit 11. In this way, the solids level in the annular fluidized bed 8 of the reactor 1 can easily be adjusted. For adjusting the solids recirculation, it is quite useful in accordance with the invention to measure the pressure loss between the central tube 3 and the outlet conduit (outlet 13) of the reactor 1 leading to the separator 14 and control the same by varying the amount of solids recirculated. What turned out to be particularly advantageous is a fluidized intermediate container with downstream dosing member, for instance a variable-speed star feeder or a roller-type rotary valve, wherein the solids not required for recirculation can be discharged for instance by means of an overflow and be supplied to a further use. The solids recirculation in a simple way contributes to keep constant the method conditions in the reactor 1 and/or adjust the mean retention time of the solids in the reactor 1.

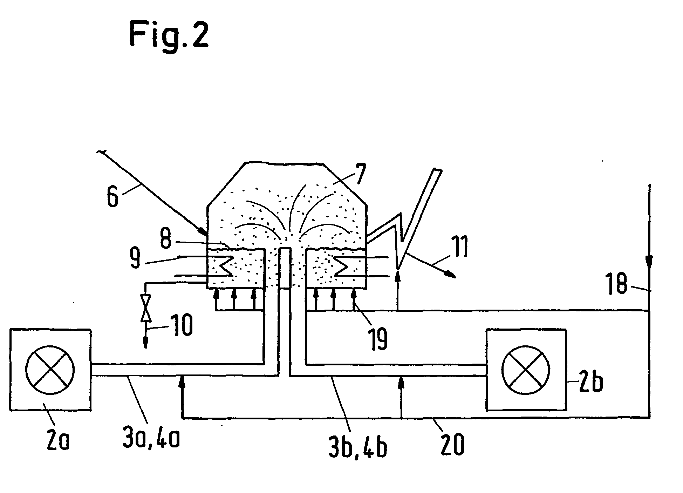

Fig. 2 shows the lower part of the reactor 1 in accordance with a second embodiment. There are provided two microwave sources 2a, 2b, a separate central tube 3a, 3b being connected to each microwave source, in order to introduce the microwaves into the mixing chamber 7. In this case as well, the central tube 3a, 3b is directly used as wave guide 4a, 4b. Both central tubes 3a, 3b are supplied with dust-free gas via conduit 20, which gas again serves as purge gas. Instead of the two illustrated microwave sources 2a, 2b, there may also be provided a plurality of microwave sources with a corresponding number of wave guides and central tubes, which are arranged below the reactor or around the reactor.

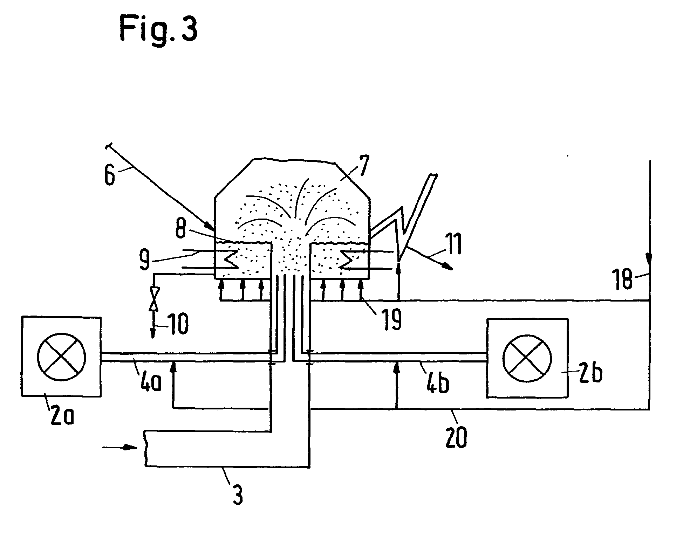

Fig. 3 likewise shows the lower part of the reactor 1. In this embodiment of the reactor 1, there are also provided two microwave sources 2a, 2b, which introduce microwaves into the mixing chamber via a separate wave guide 4a, 4b each. The wave guides 4a, 4b are introduced into the central tube 3 and are guided in the same to the mixing chamber 7. To avoid a contamination of the wave guides 4a, 4b, they are supplied with dust-free gas via conduit 20, which here serves as purge gas. In this case, the central tube 3 is used for introducing for instance dust-laden process gas. For a subsequent modification of an existing reactor 1, it is only necessary to change a conduit portion of the central tube 3, to provide for a gas-tight passage of the wave guides 4a, 4b in the central tube 3. Instead of the two illustrated microwave sources 2a, 2b, a plurality of microwave sources can again be provided, which are arranged below the reactor 1 or around the reactor 1. A plurality of microwave sources allows to vary the total intensity of the microwave radiation introduced into the reactor 1 by simply switching on and off individual microwave sources, without having to change the operating parameters of a microwave source to which the wave guide is adjusted optimally.

When applying the method, the solids to be treated at least partly absorb the electromagnetic radiation used and thus heat the fluidized bed. It has surprisingly turned out that in particular material treated at high field strengths can be leached more easily. Frequently, other technical advantages can also be realized, such as e.g. reduced retention times or the decrease of the required process temperatures.

The reactor 1 with central tube 3 and annular fluidized bed 8 is particularly useful for the thermal treatment of granular material, as it is characterized by the combination of very good mass and heat transfer characteristics with long solids retention times. In accordance with the invention, the largest part of the process gas is introduced into the mixing chamber 7 through the central tube 3, so that solids are entrained from the stationary fluidized bed 8 arranged around the central tube into the mixing chamber 7 located above this stationary fluidized bed 8. This leads to a particularly well mixed suspension. By the selection of the cross-sections of the reactor 1 it is ensured that a low mean velocity is obtained in the mixing chamber 7. The consequence is that most of the solids are separated out of the suspension and fall back into the annular fluidized bed 8. The solids circulation formed between annular fluidized bed and mixing chamber normally is higher by one order of magnitude than the solids mass flow supplied to the reactor from outside. Thus, it is ensured that the granular solids present in the mixing chamber repeatedly pass through the zone of the highest microwave power density above the central tube, in which the solids particularly easily can absorb the microwave radiation coupled into the same via wave guides.

## EP 1 575 701 B1

### Example (Calcination of gold ore)

A concrete example for the method in accordance with the invention is the calcination of gold ore, which is performed in a plant in accordance with Fig. 3.

For this case of application, the Particle-Froude-Numbers Frp are about 0.35 in the stationary annular fluidized bed 8, about 1.3 in the mixing chamber 7, and about 15 in the central tube 3. The microwave frequency used is about 2.45 GHz.

The essential method parameters can be taken from the following Table.

**Feed**

| Type | | Gold ore, ground, dried and classified |
|---|---|---|
| | | Gold content about 5 ppm $\cong$ 5 g/t |
| Grain fraction | | |
| max | $\mu$m | 50 |
| Composition | wt-% | |
| org. C | 1.05 | |
| $CaCO_3$ | 19.3 | |
| $Al_2O_3$ | 12.44 | |
| $FeS_2$ | 2.75 | |
| Inert substances, e.g. $SiO_2$ | 64.46 | |
| Solids throughput, about | t/h | 100 |

**Apparatus**

| Type of reactor: | | Reactor with annular fluidized bed, |
|---|---|---|
| | | preheating of air to 500°C |
| Connected: | | online gas analysis + exhaust gas scrubber |
| Diameter, upper part of reactor | mm | 5000 |
| Operation | continuous | |
| Installed microwave power | kW | 6 |
| Wave guide | | R26 (43 x 86 mm, stainless steel) |
| Fluidizing air | | |
| Flow rate | Nm$^3$/h | 9200 |

**Operating conditions**

| Solids retention time | min | 5 | |
|---|---|---|---|
| Temperature | °C | 550 | to 650 |
| Residual $O_2$ in exhaust gas | vol-% | 0.5 | to 3.00 |

The content of organic carbon in the product is smaller than 0.1 %.

### List of Reference Numerals:

| 1 | reactor |
|---|---|
| 2,2a,2b | microwave sources |
| 3 | central tube |

| 4,4a,4b | wave guide |
| 5 | solids bunker |
| 6 | solids conduit |
| 7 | mixing chamber |
| 8 | annular fluidized bed |
| 9 | heating elements |
| 10 | discharge conduit |
| 11 | conduit |
| 12 | cooling elements |
| 13 | outlet, outlet conduit |
| 14 | separator, cyclone |
| 15 | gas conduit |
| 16 | cooler |
| 17 | separator |
| 18 | gas conduit |
| 19 | supply conduits |
| 20 | gas conduit |

**Claims**

1. A method for the thermal treatment of granular solids in a fluidized-bed reactor (1), in which microwave radiation from a microwave source (2) is fed into the reactor (1), **characterized in that** a first gas or gas mixture is introduced from below through at least one preferably central gas supply tube (3) into a mixing chamber (7) of the reactor, the gas supply tube (3) being at least partly surrounded by a stationary annular fluidized bed (8) which is fluidized by supplying fluidizing gas, wherein the gas flowing through the gas supply system entrains solids from the stationary annular fluidized bed (8) into the mixing chamber (7), and that the microwave radiation is supplied to the mixing chamber (7) through the same gas supply tube (3).

2. The method as claimed in claim 1, **characterized in that** the gas velocities of the first gas or gas mixture and of the fluidizing gas for the annular fluidized bed (8) are adjusted such that the Particle-Froude-Numbers in the gas supply tube (3) are between 1 and 100, in the annular fluidized bed (8) between 0.02 and 2, and in the mixing chamber (7) between 0.3 and 30.

3. The method as claimed in claim 1 or 2, **characterized in that** the Particle-Froude-Number in the gas supply tube (3) is between 1.15 and 20.

4. The method as claimed in any of the preceding claims, **characterized in that** the Particle-Froude-Number in the annular fluidized bed (8) is between 0.115 and 1.15.

5. The method as claimed in any of the preceding claims, **characterized in that** the Particle-Froude-Number in the mixing chamber (7) is between 0.37 and 3.7.

6. The method as claimed in any of the preceding claims, **characterized in that** the bed height of solids in the reactor (1) is adjusted such that the annular fluidized bed (8) extends beyond the upper orifice end of the gas supply tube (3) and that solids are constantly introduced into the first gas or gas mixture and entrained by the gas stream to the mixing chamber (7) located above the orifice region of the gas supply tube (3).

7. The method as claimed in any of the preceding claims, **characterized in that** the microwave radiation is introduced through a gas supply tube (3, 3a, 3b) constituting a wave guide (4, 4a, 4b) and/or through a wave guide (4a, 4b) arranged in the gas supply tube (3).

8. The method as claimed in any of the preceding claims, **characterized in that** the microwave radiation is introduced through a plurality of wave guides (4a, 4b), each wave guide (4a, 4b) being provided with a separate microwave source (2a, 2b).

9. The method as claimed in any of the preceding claims, **characterized in that** purge gas is passed through the wave guide (4, 4a, 4b).

10. The method as claimed in any of the preceding claims, **characterized in that** the used frequency for the microwave source (2) lies between 300 MHz and 30 GHz, preferably between 400 MHz and 3 GHz, in particular at the ISM frequencies 435 MHz, 915 MHz and 2.45 GHz.

11. The method as claimed in any of the preceding claims, **characterized in that** the cross-section and the dimensions of the wave guide (4) are adjusted to the used frequency of the microwave radiation.

12. The method as claimed in any of the preceding claims, **characterized in that** the temperatures in the stationary annular fluidized bed (8) lie between 150°C and 1500°C.

13. The method as claimed in any of the preceding claims, **characterized in that** solids discharged from the reactor (1) and separated in a downstream separator (14) are at least partly recirculated to the annular fluidized bed (8) of the reactor.

14. The method as claimed in any of the preceding claims, **characterized in that** gas introduced through the wave guide (4) is used for an additional fluidization of the stationary fluidized bed (8).

15. The method as claimed in any of the preceding claims, **characterized in that** fined-grained solids with a grain size of less than 1 mm are supplied as starting material.

16. A plant for the thermal treatment of granular solids, in particular for performing a method as claimed in any of claims 1 to 15, comprising a reactor (1) constituting a fluidized-bed reactor and a microwave source (2), **characterized in that** the reactor (1) includes a gas supply system which is formed such that gas flowing through the gas supply system entrains solids from a stationary annular fluidized bed (8), which at least partly surrounds the gas supply system, into a mixing chamber (7) of the reactor and that microwave radiation is introduced by the gas supply system.

17. The plant as claimed in claim 16, **characterized in that** the gas supply system includes a gas supply tube (3) extending upwards substantially vertically from the lower region of the reactor (1) into the mixing chamber (7) of the reactor (1), the gas supply tube (3) being surrounded by a chamber which at least partly extends around the gas supply tube (3) and in which the stationary annular fluidized bed (8) is formed.

18. The plant as claimed in claim 17, **characterized in that** the gas supply tube (3) is arranged approximately centrally with reference to the cross-sectional area of the reactor (1).

19. The plant as claimed in any of claims 16 to 18, **characterized in that** the gas supply tube (3) constitutes a wave guide (4) for introducing the microwave radiation.

20. The plant as claimed in any of claims 16 to 19, **characterized in that** in the gas supply tube (3) at least one wave guide (4a, 4b) is arranged for introducing the microwave radiation.

21. The plant as claimed in any of claims 16 to 20, **characterized in that** a plurality of gas supply tubes (3a, 3b) and/or a plurality of wave guides (4a, 4b) are provided, a separate microwave source (2a, 2b) being connected to each wave guide (4a, 4b).

22. The plant as claimed in any of claims 19 to 21, **characterized in that** a wave guide (4) has a rectangular or round cross-section.

23. The plant as claimed in any of claims 19 to 22, **characterized in that** a wave guide (4) has a length of 0.1 m to 10 m.

**Patentansprüche**

1. Ein Verfahren zur thermischen Behandlung von körnigen Feststoffen in einem Reaktor (1) mit Wirbelschicht, bei dem Mikrowellenstrahlung aus einer Mikrowellen-Quelle (2) in den Reaktor (1) eingespeist wird, **dadurch gekennzeichnet, dass** ein erstes Gas oder Gasgemisch von unten durch mindestens ein vorzugsweise zentrales Gaszufuhrrohr (3) in eine Mischkammer (7) des Reaktors eingeführt wird, wobei das Gaszufuhrrohr (3) wenigstens teilweise von einer durch Zufuhr von Fluidisierungsgas fluidisierten, stationären Ringwirbelschicht (8) umgeben wird, wobei das durch das Gaszufuhrsystem strömende Gas Feststoffe aus der stationären Ringwirbelschicht (8) in die Mischkammer (7) mitreißt, und dass die Mikrowellenstrahlung der Mischkammer (7) durch dasselbe Gaszufuhrrohr (3) zugeführt wird.

2. Das Verfahren nach Anspruch 1, **dadurch gekennzeichnet, dass** die Gasgeschwindigkeiten des ersten Gases oder Gasgemisches sowie des Fluidisierungsgases für die Ringwirbelschicht (8) derart eingestellt werden, dass die Partikel-Froude-Zahlen in dem Gaszufuhrrohr (3) zwischen 1 und 100, in der Ringwirbelschicht (8) zwischen 0,02 und 2 sowie in der Mischkammer (7) zwischen 0,3 und 30 betragen.

3. Das Verfahren nach Anspruch 1 oder 2, **dadurch gekennzeichnet, dass** die Partikel-Froude-Zahl in dem Gaszufuhrrohr (3) zwischen 1,15 und 20 beträgt.

4. Das Verfahren nach einem der vorhergehenden Ansprüche, **dadurch gekennzeichnet, dass** die Partikel-Froude-Zahl in der Ringwirbelschicht (8) zwischen 0,115 und 1,15 beträgt.

5. Das Verfahren nach einem der vorhergehenden Ansprüche, **dadurch gekennzeichnet, dass** die Partikel-Froude-Zahl in der Mischkammer (7) zwischen 0,37 und 3,7 beträgt.

6. Das Verfahren nach einem der vorhergehenden Ansprüche, **dadurch gekennzeichnet, dass** der Füllstand der Feststoffe in dem Reaktor (1) so eingestellt wird, dass sich die Ringwirbelschicht (8) über das obere Mündungsende des Gaszufuhrrohrs (3) hinaus erstreckt und dass ständig Feststoff in das erste Gas oder Gasgemisch eingetragen und von dem Gasstrom zu der oberhalb des Mündungsbereichs des Gaszufuhrrohrs (3) befindlichen Mischkammer (7) mitgeführt wird.

7. Das Verfahren nach einem der vorhergehenden Ansprüche, **dadurch gekennzeichnet, dass** die Mikrowellenstrahlung durch ein als Hohlleiter (4, 4a, 4b) ausgebildetes Gaszufuhrrohr (3, 3a, 3b) und/oder durch einen in dem Gaszufuhrrohr (3) angeordneten Hohlleiter (4a, 4b) eingespeist wird.

8. Das Verfahren nach einem der vorhergehenden Ansprüche, **dadurch gekennzeichnet, dass** die Mikrowellenstrahlung durch mehrere Hohlleiter (4a, 4b) eingespeist wird, wobei jeder Hohlleiter (4a, 4b) mit einer eigenen Mikrowellen-Quelle (2a, 2b) versehen ist.

9. Das Verfahren nach einem der vorhergehenden Ansprüche, **dadurch gekennzeichnet, dass** Spülgas durch den Hohlleiter (4, 4a, 4b) geführt wird.

10. Das Verfahren nach einem der vorhergehenden Ansprüche, **dadurch gekennzeichnet, dass** die verwendete Frequenz für die Mikrowellen-Quelle (2) zwischen 300 MHz und 30 GHz liegt, vorzugsweise zwischen 400 MHz und 3 GHz, insbesondere bei den ISM-Frequenzen 435 MHz, 915 MHz und 2,45 GHz.

11. Das Verfahren nach einem der vorhergehenden Ansprüche, **dadurch gekennzeichnet, dass** der Querschnitt und die Abmessungen des Hohlleiters (4) an die verwendete Frequenz der Mikrowellenstrahlung angepasst werden.

12. Das Verfahren nach einem der vorhergehenden Ansprüche, **dadurch gekennzeichnet, dass** die Temperaturen in der stationären Ringwirbelschicht (8) zwischen 150 °C und 1500 °C liegen.

13. Das Verfahren nach einem der vorhergehenden Ansprüche, **dadurch gekennzeichnet, dass** aus dem Reaktor (1) ausgetragener und in einem nachgeschalteten Abscheider (14) abgeschiedener Feststoff zumindest teilweise in die Ringwirbelschicht (8) des Reaktors zurückgeführt wird.

14. Das Verfahren nach einem der vorhergehenden Ansprüche, **dadurch gekennzeichnet, dass** durch den Hohlleiter (4) eingespeistes Gas für eine zusätzliche Fluidisierung der stationären Wirbelschicht (8) genutzt wird.

15. Das Verfahren nach einem der vorhergehenden Ansprüche, **dadurch gekennzeichnet, dass** als Ausgangsmaterial feinkörniger Feststoff mit einer Korngröße von weniger als 1 mm zugeführt wird.

16. Eine Anlage zur thermischen Behandlung von körnigen Feststoffen, insbesondere zur Durchführung eines Verfahrens nach einem der Ansprüche 1 bis 15, mit einem als Wirbelschichtreaktor ausgebildeten Reaktor (1) und einer Mikrowellen-Quelle (2), **dadurch gekennzeichnet, dass** der Reaktor (1) ein Gaszuführungssystem aufweist, welches derart ausgebildet ist, dass durch das Gaszuführungssystem strömendes Gas Feststoff aus einer stationären Ringwirbelschicht (8), die das Gaszuführungssystem wenigstens teilweise umgibt, in eine Mischkammer (7) des Reaktors mitreißt, und dass Mikrowellenstrahlung durch das Gaszuführungssystem eingespeist wird.

17. Die Anlage nach Anspruch 16, **dadurch gekennzeichnet, dass** das Gaszuführungssystem ein sich vom unteren Bereich des Reaktors (1) im Wesentlichen vertikal nach oben bis in die Mischkammer (7) des Reaktors (1) erstreckendes Gaszufuhrrohr (3) aufweist, wobei das Gaszufuhrrohr (3) von einer wenigstens teilweise um das Gaszufuhrrohrrohr (3) herumführenden Kammer, in der die stationäre Ringwirbelschicht (8) ausgebildet ist, umgeben ist.

18. Die Anlage nach Anspruch 17, **dadurch gekennzeichnet, dass** das Gaszufuhrrohr (3), bezogen auf die Querschnittsfläche des Reaktors (1), in etwa mittig angeordnet ist.

19. Die Anlage nach einem der Ansprüche 16 bis 18, **dadurch gekennzeichnet, dass** das Gaszufuhrrohr (3) als Hohlleiter (4) zum Einspeisen der Mikrowellenstrahlung ausgebildet ist.

20. Die Anlage nach einem der Ansprüche 16 bis 19, **dadurch gekennzeichnet, dass** in dem Gaszufuhrrohr (3) mindestens ein Hohlleiter (4a, 4b) zum Einspeisen der Mikrowellenstrahlung angeordnet ist.

21. Die Anlage nach einem der Ansprüche 16 bis 20, **dadurch gekennzeichnet, dass** mehrere Gaszufuhrrohre (3a, 3b) und/oder mehrere Hohlleiter (4a, 4b) vorgesehen sind, wobei an jeden Hohlleiter (4a, 4b) eine eigene Mikrowellen-Quelle (2a, 2b) angeschlossen ist.

22. Die Anlage nach einem der Ansprüche 19 bis 21, **dadurch gekennzeichnet, dass** ein Hohlleiter (4) einen rechteckigen oder runden Querschnitt hat.

23. Die Anlage nach einem der Ansprüche 19 bis 22, **dadurch gekennzeichnet, dass** ein Hohlleiter (4) eine Länge von 0,1 m bis 10 m hat.

**Revendications**

1. Procédé de traitement thermique de solides granulaires dans un réacteur à lit fluidisé (1), dans lequel un rayonnement de micro-ondes venant d'une source de micro-ondes (2) est alimenté dans le réacteur (1), **caractérisé en ce que** un premier gaz ou mélange gazeux est introduit par en-dessous dans une chambre de mélange (7) du réacteur, par au moins un tuyau d'alimentation en gaz (3) de préférence central, le tuyau d'alimentation en gaz (3) étant au moins partiellement entouré par un lit fluidisé annulaire et stationnaire (8), qui est fluidisé par l'apport de gaz fluidisant, dans lequel le gaz s'écoulant par le système d'alimentation en gaz entraîne des solides du lit fluidisé annulaire et stationnaire (8) vers la chambre de mélange (7), et **en ce que** le rayonnement de micro-ondes est fourni à la chambre de mélange (7) par le même tuyau d'alimentation en gaz (3).

2. Procédé selon la revendication 1, **caractérisé en ce que** les vitesses de gaz du premier gaz ou premier mélange gazeux et du gaz fluidisant pour le lit fluidisé annulaire (8) sont ajustées de telle façon que les nombres de Froude des particules varient entre 1 et 100 dans le tuyau d'alimentation en gaz (3), entre 0,02 et 2 dans le lit fluidisé annulaire (8) et entre 0,3 et 30 dans la chambre de mélange (7).

3. Procédé selon les revendications 1 ou 2, **caractérisé en ce que** le nombre de Froude des particules dans le tuyau d'alimentation en gaz (3) varie entre 1,15 et 20.

4. Procédé selon l'une quelconque des revendications précédentes, **caractérisé en ce que** le nombre de Froude des particules dans le lit fluidisé annulaire (8) varie entre 1,115 et 1,15.

5. Procédé selon l'une quelconque des revendications précédentes, **caractérisé en ce que** le nombre de Froude des particules dans la chambre de mélange (7) varie entre 0,37 et 3,7.

6. Procédé selon l'une quelconque des revendications précédentes, **caractérisé en ce que** la hauteur de lit des solides dans le réacteur (1) est ajustée de façon à ce que le lit fluidisé annulaire (8) se poursuive au-delà de l'extrémité supérieure de l'orifice du tuyau d'alimentation en gaz (3) et de façon à ce que les solides soient constamment introduits dans le premier gaz ou premier mélange gazeux et entraînés par le flux de gaz vers la chambre de mélange (7) située au-dessus de la région de l'orifice du tuyau d'alimentation en gaz (3).

**7.** Procédé selon l'une quelconque des revendications précédentes, **caractérisé en ce que** le rayonnement de micro-ondes est introduit par un tuyau d'alimentation en gaz (3, 3a, 3b) constituant un guide d'ondes (4, 4a, 4b) et/ou par un guide d'onde (4a, 4b) disposé dans le tuyau d'alimentation en gaz (3).

**8.** Procédé selon lune quelconque des revendications précédentes, **caractérisé en ce que** le rayonnement de micro-ondes est introduit par une multitude de guides d'ondes (4a, 4b), chacun des guides d'ondes (4a, 4b) étant doté d'une source de micro-ondes individuelle (2a, 2b).

**9.** Procédé selon l'une quelconque des revendications précédentes, **caractérisé en ce que** du gaz de purge traverse le guide d'ondes (4, 4a, 4b).

**10.** Procédé selon l'une quelconque des revendications précédentes, **caractérisé en ce que** la fréquence utilisée pour la source de micro-ondes (2) varie entre 300 MHz et 30 GHz, de préférence entre 400 MHz et 3 GHz, s'élevant en particulier au niveau des fréquences ISM, de 435 MHz, 915 MHZ et 2,45 GHz.

**11.** Procédé selon l'une quelconque des revendications précédentes, **caractérisé en ce que** la section transversale et les dimensions du guide d'ondes (4) sont ajustées à la fréquence utilisée pour le rayonnement de micro-ondes.

**12.** Procédé selon l'une quelconque des revendications précédentes, **caractérisé en ce que** les températures dans le lit fluidisé annulaire et stationnaire (8) varient entre 150°C et 1500°C.

**13.** Procédé selon l'une quelconque des revendications précédentes, **caractérisé en ce que** les solides évacués du réacteur (1) et séparés dans un séparateur en aval (14) sont au moins partiellement réacheminées vers le lit fluidisé annulaire (8) du réacteur.

**14.** Procédé selon l'une quelconque des revendications précédentes, **caractérisé en ce que** le gaz introduit par le guide d'ondes (4) est utilisé pour une fluidisation supplémentaire du lit fluidisé annulaire (8).

**15.** Procédé selon l'une quelconque des revendications précédentes, **caractérisé en ce que** des solides en fins granulés, avec une taille de grain de moins de 1 mm, sont fournis en tant que matériau de départ.

**16.** Usine de traitement thermique de solides granulaires, conçue en particulier pour exécuter un procédé selon l'une des revendications 1 à 15, comprenant un réacteur (1) constituant un réacteur à lit fluidisé, ainsi qu'une source de micro-ondes (2), **caractérisée en ce que** le réacteur (1) comporte un système d'alimentation en gaz qui est formé de telle façon que le gaz s'écoulant par le système d'alimentation en gaz entraîne des solides venant d'un lit fluidisé annulaire et stationnaire (8), qui entoure au moins partiellement le système d'alimentation en gaz, vers une chambre de mélange (7) du réacteur, et **en ce que** le rayonnement de micro-ondes est introduit par le système d'alimentation en gaz.

**17.** Usine selon la revendication 16, **caractérisée en ce que** le système d'alimentation en gaz comporte un tuyau d'alimentation en gaz (3) se prolongeant vers le haut, essentiellement verticalement à partir de la région inférieure du réacteur (1) vers la chambre de mélange (7) du réacteur (1), le tuyau d'alimentation en gaz (3) étant entouré par une chambre qui se poursuit au moins partiellement autour du tuyau d'alimentation en gaz (3) et dans laquelle est formé le lit fluidisé annulaire et stationnaire (8).

**18.** Usine selon la revendication 17, **caractérisée en ce que** le tuyau d'alimentation en gaz (3) est disposé de manière approximativement centrale par rapport à la zone de la section transversale du réacteur (1).

**19.** Usine selon l'une quelconque des revendications 16 à 18, **caractérisée en ce que** le tuyau d'alimentation en gaz (3) constitue un guide d'ondes (4) pour l'introduction du rayonnement de micro-ondes.

**20.** Usine selon l'une quelconque des revendications 16 à 19, **caractérisée en ce qu'**au moins un guide d'ondes (4a, 4b) est disposé dans le tuyau d'alimentation en gaz (3) pour l'introduction du rayonnement de micro-ondes.

**21.** Usine selon l'une quelconque des revendications 16 à 20, **caractérisée en ce qu'**une pluralité de tuyaux d'alimentation en gaz (3a, 3b) et/ou une pluralité de guides d'ondes (4a, 4b) sont fournis, une source de micro-ondes (2a, 2b) séparée étant reliée à chacun des guides d'ondes (4a, 4b).

**22.** Usine selon l'une quelconque des revendications 19 à 21, **caractérisée en ce qu'**un guide d'ondes (4) possède une section transversale rectangulaire ou ronde.

**23.** Usine selon l'une quelconque des revendications 19 à 22, **caractérisée en ce qu'**un guide d'ondes (4) a une hauteur mesurant entre 0,1 m et 10 m.

## Fig.1

# Fig.2

# Fig.3

**EP 1 575 701 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5972302 A
- EP 0403820 B1